# EUROPEAN PATENT APPLICATION

(11) **EP 1 126 634 A2**
(43) Date of publication of application: **22.08.2001**
(21) Application number: 00126594.1
(22) Date of filing: 13.12.2000
(51) Int. Cl.: H04B 7/185

(54) **Enhanced satellite data terminal**

(30) Priority: 15.02.2000 US 504541
(71) Applicant: TRW Inc., Redondo Beach, California 90278 (US)
(72) Inventor: Saunders, Oliver W., Los Angeles, CA 90066 (US)
(74) Representative: Schmidt, Steffen J., Dipl.-Ing.

(57) **Abstract**

An enhanced satellite data terminal (104) for communicating satellite and network data includes a portable environmental casing (108) protecting wireless LAN circuitry (112) coupled to a wireless LAN antenna (110). The wireless LAN circuitry (112) is also coupled to satellite data terminal circuitry (114) (and associated satellite antenna (116)). The wireless LAN circuitry (112) and satellite data terminal circuitry (114) are integrated together in the portable environmental casing (108) as a single unit. The environmental casing (108) may, for example, be water-tight and may be comprised of plastic, fiberglass, or aluminum. Moreover, the enhanced satellite data terminal (104) may include a power source (130) coupled to the wireless LAN circuitry (112) and the satellite data terminal circuitry (114).

## Description

### BACKGROUND OF THE INVENTION

The present invention relates to satellite data terminals. In particular, the present invention relates to satellite data terminals that communicate with terrestrial LAN data networks.

Satellite data terminals are typically constructed as a two part configuration. In most cases, a fixed mounted outdoor satellite antenna connects via coaxial cable to fixed indoor data terminal circuitry which, in turn, connects to a terrestrial data network. The antenna must be mounted in a location that provides appropriate mechanical support and is in a direct line of sight of the the antenna; the indoor data terminal must be placed such that it can connect to the terrestrial data network.

In past data terminal configurations, high quality coaxial cables had to be used to carry transmission signals between the satellite antenna and the data terminal. The high quality coaxial cable, in addition to its basic cost, requires care in its installation and maintenance.

These and other considerations often made expensive or even prohibitive the cost of integrating satellite data terminals into existing office environment. Furthermore, the restrictions imposed by antenna siting requirements and data terminal access made rapid deployment of satellite data terminals difficult and occasionally impossible.

The significance (usefulness, etc.) of overcoming satellite terminal deployment limitations has only recently emerged. For example, NERA Telecommunications, Ltd., has integrated and industry standard portable telephone with an INMARSAT satellite voice terminal thus permitting the user to communicate through the terminal at reasonable distances (e.g., 100 meter radius) from it without connecting wires or cables. The handset, however, while useful for placing satellite borne telephone calls, does not address the high bandwidth needs of terrestrial networks.

A need has long existed in the industry for an enhanced satellite data terminal which connects high bandwidth satellite networks with high bandwidth terrestrial networks without the physical installation restrictions imposed by current terminal designs.

### BRIEF SUMMARY OF THE INVENTION

One aspect of the present invention is an enhanced satellite data terminal that includes a satellite data terminal coupled to a wireless LAN radio.

Another aspect of the current invention is a satellite data terminal that integrates into existing facilities and with existing data networks without expensive cabling.

Yet another aspect of the present invention is a portable satellite terminal that facilitates use of satellite based data communication in emergency and transient situations.

A preferred embodiment of the present invention provides an enhanced satellite data terminal for communicating satellite and network data. The enhanced satellite data terminal preferably includes an environmental casing protecting wireless LAN circuitry coupled to a wireless LAN antenna. The wireless LAN circuitry is also coupled to satellite data terminal circuitry (and an associated satellite antenna). The wireless LAN circuitry and satellite data terminal circuitry are integrated in the environmental casing as a single unit. The environmental casing may, for example, be water-tight and may be comprised of plastic, fiberglass, or aluminum.

A preferred embodiment of the present invention also resides in a method for transmitting data through an enhanced satellite data terminal. The method includes transmitting satellite data from a terrestrial network to a wireless LAN interface of a portable satellite data terminal. The satellite data is then communicated to the satellite data terminal circuitry (preferably integrated with the wireless LAN circuitry). The satellite data may then be transmitted to a satellite through a satellite antenna which is coupled to the satellite data terminal circuitry.

The method may also receive network data sent by a satellite at the satellite antenna and the satellite data terminal circuitry, communicate the network data from the satellite data terminal circuitry to the wireless LAN interface of the portable satellite data terminal, and the communicate the network data from the wireless LAN interface to a hardwire LAN data network.

### BRIEF DESCRIPTION OF THE DRAWINGS

Figure 1 illustrates an enhanced satellite data terminal integrated with a hardwired LAN data network.

Figure 2 illustrates an enhanced satellite data terminal integrated into a peer-to-peer wireless LAN data network.

Figure 3 demonstrates a method for communicating data through an enhanced satellite data terminal.

### DETAILED DESCRIPTION OF THE INVENTION

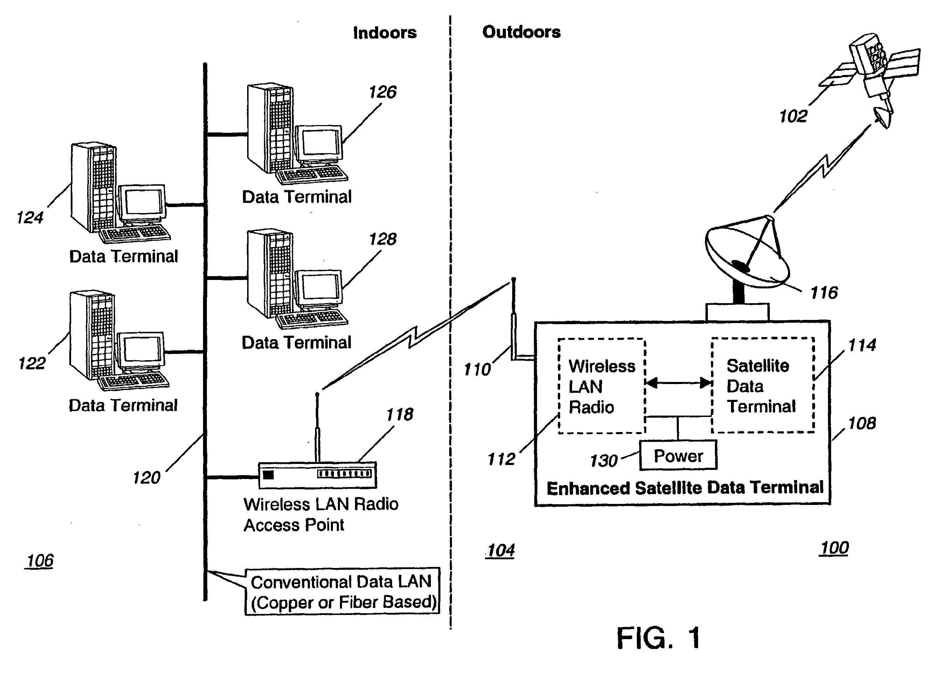

Turning now to Figure 1, that figure shows a satellite communications network 100. The communications network 100 includes a satellite 102, an enhanced satellite data terminal 104, and a hardwired LAN data network 106. The enhanced satellite data terminal 104 comprises an environmental casing 108 and a wireless LAN antenna 110 coupled to wireless LAN circuitry 112. The wireless LAN circuitry 112 is integrated with satellite data terminal circuitry 114 that is coupled to a satellite antenna 116. The hardwired LAN data network 106 includes a wireless LAN radio access point 118 connected by communication cable 120 to a number of data terminals 122-128. The satellite data terminal 104 also includes a power source 130 coupled to the wireless LAN circuitry 112 and the satellite data terminal circuitry 114.

Still referring to Figure 1, network data is transmitted from the satellite 102 to the satellite antenna 116. The satellite data terminal circuitry 114 detects and optionally decodes and error corrects the network data. Next, the satellite data terminal circuitry 114 communicates the network data to the wireless LAN circuitry 112, which transmits the network data through the wireless LAN antenna 110. The network data arrives at the wireless LAN radio access point 118, which receives the network data and communicates it to the data terminals 122-128 via the communication cable 120.

For data destined for the satellite (i.e., satellite data), the process is reversed, with the data terminals 122-128 communicating the satellite data to the access point 118 via the communication cable 120. The satellite data is then transmitted from the access point 118 to the wireless LAN antenna 110 and the wireless LAN circuitry 112. Next, the wireless LAN circuitry 112 communicates the satellite data to the satellite data terminal circuitry 114. The satellite data terminal circuitry 114 transmits the satellite data through the satellite antenna 116 to the satellite 102.

In a preferred embodiment of the invention, the environmental casing 108 may be designed to withstand a variety of environmental conditions, including temperature extremes and variations, precipitation, high winds, flying debris, and the like. Such design may use heavy duty plastics, fiberglass, or aluminum and, use water-sealing or water-proofing techniques.

Additionally, the design may take into account not only the exterior casing 108 but also the arrangement and ruggedness of the other components of the enhanced satellite data terminal 104. To this end, the wireless LAN circuitry 112 and the satellite data terminal circuitry 114 are preferably integrated onto a single circuit board or otherwise closely and securely coupled together. The rugged and easily installed nature of the enhanced satellite data terminal 104 greatly facilitates its use in temporary or emergency situations.

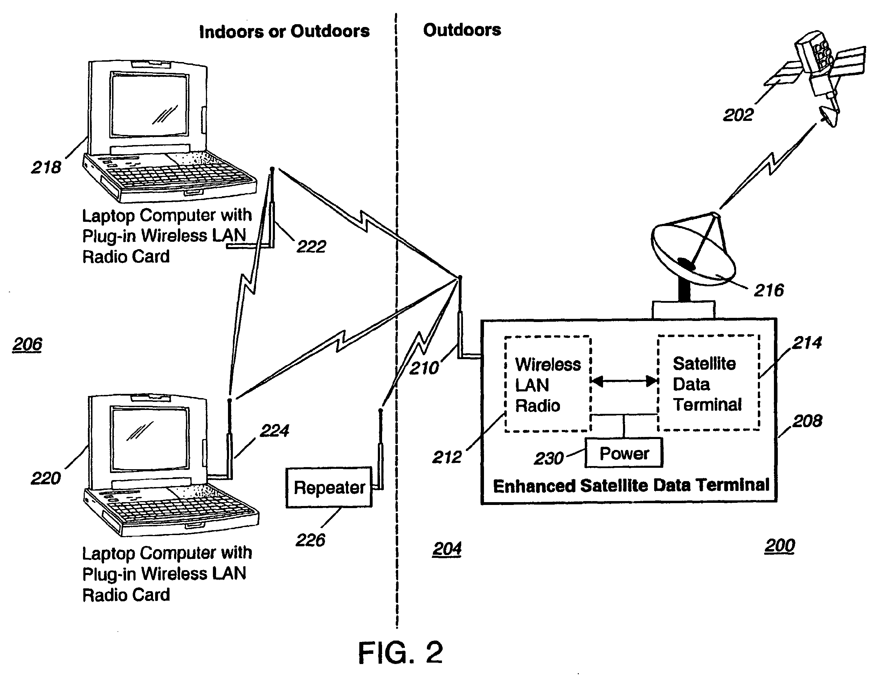

Turning next to Figure 2, that figure shows an alternate embodiment of a satellite communications network 200. The network 200 features a satellite 202, an enhanced satellite data terminal 204, and a peer-to-peer wireless LAN data network 206. The enhanced satellite data terminal 204 comprises a environmental casing 208 and a wireless LAN antenna 210 coupled to wireless LAN circuitry 212. The wireless LAN circuitry 212 is integrated with satellite data terminal circuitry 214 that is coupled to a satellite antenna 216. The wireless LAN data network 206 includes several laptop computers 218-220, connected to one another via wireless LAN radio cards and antennas 222-224.

Still referring to Figure 2, network data is transmitted from the satellite 202 to the satellite antenna 216. The satellite data terminal circuitry 214 detects and optionally decodes and error corrects the network data. Next, the satellite data terminal circuitry 214 communicates the network data to the wireless LAN circuitry 212, which transmits the network data through the wireless LAN antenna 210. The network data arrives at the wireless LAN radio cards 222-224, which receive the network data and communicate it to the laptop computers 218-220.

For satellite data, the process is reversed, with the laptop computers 218-220 communicating the satellite data to the wireless LAN radio cards 222-224. The satellite data is then transmitted from the wireless LAN radio cards 222-224 to the wireless LAN antenna 210 and the wireless LAN circuitry 212. Next, the wireless LAN circuitry 212 communicates the satellite data to the satellite data terminal circuitry 214. The satellite data terminal circuitry 214 transmits the satellite data through the satellite antenna 216 to the satellite 202.

In another embodiment, the invention may include at least one wireless LAN radio signal repeater 226 to allow longer-distance transmission of a network or satellite data signal between the wireless LAN antenna 210, 110 and a terrestrial network 206, 106. The repeaters receive a data signal and broadcast that data signal to either another repeater, the wireless LAN antenna 210, 110, or the terrestrial network 206, 106, as appropriate. Repeaters may be used, for example, if the enhanced satellite data terminal 204, 104 cannot be placed within proper signal range of the terrestrial network 206, 106.

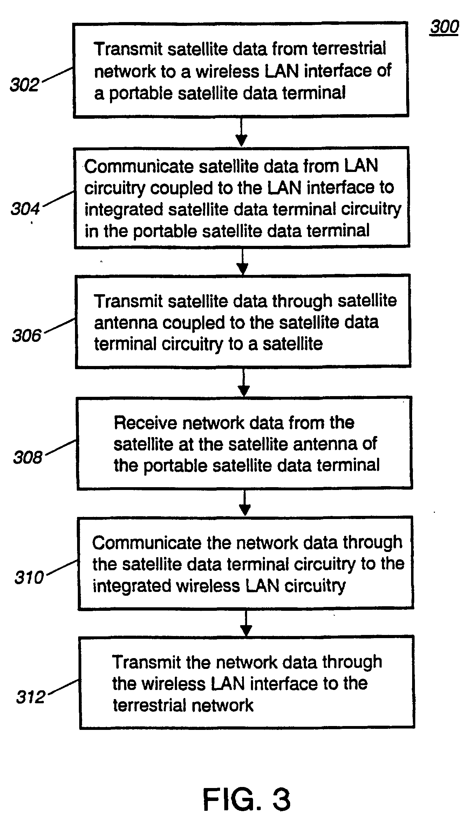

Turning now to Figure 3, that figure shows a flow diagram 300 of a method for transmitting data through an enhanced satellite data terminal. At step 302, a terrestrial network transmits satellite data to a wireless LAN interface of a portable satellite data terminal. Then, at step 304, LAN circuitry coupled to the LAN interface communicates the satellite data to integrated satellite data terminal circuitry in the portable satellite data terminal. The satellite data terminal circuitry, at step 306, transmits the satellite data through a coupled satellite antenna to a satellite. The process is reversed at step 308, as network data is transmitted from the satellite to the satellite antenna and the satellite data terminal circuitry. At step 310, the satellite data terminal circuitry communicates the network data to the integrated wireless LAN circuitry. Finally, the network data is transmitted, at step 312, through the wireless LAN interface to the terrestrial network.

The invention disclosed, in part through its use of wireless LAN technology, effectively integrates high bandwidth satellite communication into existing LAN networks. Further, by integrating the wireless LAN circuitry 112, 212 and the satellite data terminal circuitry 114, 214, the present enhanced satellite data terminal 104, 204 provides greater environmental ruggedness. This integration eliminates the need for expensive high quality coaxial cable, increasing cost effectiveness and ease of installation. Moreover, the inherent portability and ruggedness of the enhanced satellite data terminal 104, 204 uniquely suit it for transient or emergency situations.

While particular elements, embodiments and applications of the present invention have been shown and described, it is understood that the invention is not limited thereto since modifications may be made by those skilled in the art, particularly in light of the foregoing teaching. It is therefore contemplated by the appended claims to cover such modifications and incorporate those features which come within the spirit and scope of the invention.

## Claims

1. An enhanced satellite data terminal comprising:
an environmental casing enclosing:
wireless LAN circuitry for communicating with an external network; and
satellite data terminal circuitry coupled to the wireless LAN circuitry;
wherein the wireless LAN circuitry and satellite data terminal circuitry are integrated together in the environmental casing.

2. The enhanced satellite data terminal of claim 1, further comprising a satellite data antenna coupled to the satellite data terminal circuitry.

3. The enhanced satellite data terminal of claim 1, further comprising a wireless LAN antenna coupled to the wireless LAN circuitry;

4. The enhanced satellite data terminal of claim 1, wherein the environmental casing is a water-tight environmental casing.

5. The enhanced satellite data terminal of claim 1, wherein the environmental casing comprises at least one of plastic, fiberglass, and aluminum.

6. The enhanced satellite data terminal of claim 1, further comprising a power source inside the casing and coupled to the wireless LAN circuitry and the satellite data terminal circuitry.

7. A method for transmitting data through an enhanced satellite data terminal, the method comprising:
receiving satellite data at a wireless LAN interface of a satellite data terminal;
communicating the satellite data to satellite data terminal circuitry integrated with wireless LAN circuitry in the portable satellite data terminal; and
communicating the satellite data through a satellite antenna coupled to the satellite data terminal circuitry.

8. The method of claim 7, further comprising the steps of:
receiving network data at the satellite antenna;
communicating the network data from the satellite antenna to the satellite data terminal circuitry;
communicating the network data from the satellite data terminal circuitry to the wireless LAN interface of the satellite data terminal.

9. The method of claim 8, further comprising the step of communicating the network data from the wireless LAN interface to a hardwired LAN data network.

10. The method of claim 8, further comprising the step of transmitting the network data from a satellite to the satellite antenna.

11. The method of claim 8, further comprising the step of transmitting the satellite data from a terrestrial network to the wireless LAN interface.
